(19) Europäisches Patentamt
European Patent Office
Office européen des brevets

(11) Publication number: **0 174 122 A2**

# (12) EUROPEAN PATENT APPLICATION

(21) Application number: 85305826.1

(22) Date of filing: 16.08.85

(51) Int. Cl.⁴: C01B 33/26

(30) Priority: 21.08.84 US 642968

(43) Date of publication of application: 12.03.86 Bulletin 86/11

(84) Designated Contracting States: AT BE DE FR GB IT NL SE

(71) Applicant: MOBIL OIL CORPORATION
150 East 42nd Street
New York New York 10017(US)

(72) Inventor: Derouane, Eric Gerard
56 Rue des Champs Verts
B-5020 Namur (Champion)(BE)
Inventor: von Ballmoos, Roland
Box 144, Route 518
Hopewell New Jersey 08525(US)

(74) Representative: West, Alan Harry
Mobil Court 3 Clements Inn
London WC2A 2EB(GB)

## (54) Synthesis of silicophosphoaluminates.

(57) A method for synthesizing a crystalline silicophosphoaluminate utilizes a two-phase reaction mixture. Aluminum phosphate is dissolved or partially dissolved in one aqueous phase of the reaction mixture, whereas a source of silicon is dissolved in another organic phase

EP 0 174 122 A2

SYNTHESIS OF SILICOPHOSPHOALUMINATES

This invention relates to synthesis of crystalline silicophosphoaluminates. The synthesis results in silicophosphoaluminates which have ion-exchange properties and are readily convertible to catalytically active material.

Aluminum phosphates are taught in, for example, U.S. Patents 4,310,440 and 4,385,994. Aluminum phosphate materials have electroneutral lattices and, therefore, are not useful as ion-exchangers or as catalyst components. Microporous aluminum phosphates have a composition typified as: $xR : Al_2O_3 : (1.0 \pm 0.2) P_2O_5 : yH_2O$ wherein R is an organic amine or quaternary ammonium salt entrapped within the aluminum phosphate and playing a role as crystallization template, x and y representing the amounts of R and $H_2O$ needed to fill the microporous voids. Because the aluminum/phosphorus atomic ratio of these materials about unity, they display virtually no ion-exchange properties, the framework positive charge on phosphorus being balanced by corresponding negative charge on aluminum: $AlPO_4 = (AlO_2^-)(PO_2^+)$

The phosphorus-substituted zeolites of Canadian Patents 911,416; 911,417 and 911,418 are referred to as "aluminosilicophosphate" zeolites. Some of the phosphorus therein appears to be occluded, not structural. These latter materials containing silicon, aluminum and phosphorus are characterized by the general formula: $M_{(x-y)}:x(AlO_2^-):(SiO_2):y(PO_2^+):zH_2O$ wherein M is a monovalent cation, x is approximately 0.125-1.5, y is 0.05-1.0 and z is the number of hydration water molecules. Structural replacement of silicon with phosphorus has been realized in materials called silica clathrates (West German Patent 3,128,988).

U.S. Patent 4,363,748 describes a combination of silica and aluminum-calcium-cerium phosphate as a low acid activity catalyst for oxidative dehydrogenation. Great Britain Patent 2,068,253 discloses a combination of silica and aluminum-calcium-tungsten phosphate as a low acid activity catalyst for oxidative dehydrogenation. U.S. Patent 3,801,704 teaches an aluminum phosphate treated in a certain way to impart acidity. U.S. Patent 4,228,036 teaches an alumina-aluminum phosphate-silica matrix as an amorphous body to be mixed with zeolite for use as cracking catalyst. U.S. Patent 3,213,035 teaches improving hardness of amorphous aluminosilicate catalysts by treatment with phosphoric acid.

U.S. Patent 2,876,266 describes an active silicophosphoric acid or salt phase of an amorphous material prepared by absorption of phosphoric acid by premolded silicates or aluminosilicates.

Other teachings of aluminum phosphates and their preparation include U.S. Patents 4,365,095; 4,361,705; 4,222,896; 4,210,560; 4,179,358; 4,158,621; 4,071,471; 4,014,945; 3,904,550 and 3,697,550. Since their neutral framework structure is void of ion-exchange properties, they are used as catalyst supports or matrices.

U.S. Patent 4,440,871 describes various crystalline microporous materials characterized as "silicoaluminophosphates". These materials are prepared hydrothermally from aqueous gels containing reactive phosphorus, silicon and aluminum compounds and organic templating agents.

The crystalline silicophosphoaluminates synthesized hereby have molecular sieve or other framework structures exhibiting ion-exchange properties and are easily and conveniently converted to materials having intrinsic catalytic activity.

According to the invention, there is provided a method for the synthesis of a crystalline silicophosphoaluminate, comprising the steps of:

(i) preparing a synthesis mixture comprising a liquid organic phase and a liquid aqueous phase, said organic phase comprising an organic solvent and a silicon source soluble in said solvent, said aqueous phase comprising dissolved or partially dissolved aluminum phosphate, said synthesis mixture further comprising a directing agent;

(ii) maintaining said reaction mixture under crystallization conditions until crystals of said silicophosphoaluminate are formed; and

(iii)recovering said silicophosphoaluminate.

Thus the method of the invention comprises first preparing a reaction mixture composed of two liquid phases, an organic phase and an aqueous phase. The organic phase comprises an organic solvent, more particularly a substantially water immiscible organic solvent, such as a $C_5$-$C_{10}$ alcohol, and a silicon source, such as an alkoxy-silicate, soluble in said solvent.

Also contained in the reaction mixture and preferably in the organic phase, is an organic directing agent, which is preferably selected from the group consisting of organic mono-, di-or polyamines and onium compounds having the following formulas: $R_4M^+X^-$ or $(R_3M^+R'M^+R_3)X_2^-$ wherein R or R' is alkyl of from 1 to 20 carbon atoms, heteroalkyl of from 1 to 20 carbon atoms, aryl, heteroaryl, cycloalkyl of from 3 to 6 carbon atoms, cycloheteroalkyl of from 3 to 6 carbon atoms, or combinations thereof; M is a tetracoordinate element (e.g. nitrogen, phosphorus, arsenic, antimony or bismuth) or a heteroatom (e.g. N, O, S, Se, P, As, etc.) in an alicyclic, heteroalicyclic or heteroaromatic structure; and X is an anion (e.g. fluoride, chloride, bromide, iodide, hydroxide, acetate, sulfate, carboxylate, etc.). When M is a heteroatom in an alicyclic, heteroalicyclic or heteroaromatic structure, such structure may be, as seen in Formula I, wherein R' is alkyl of from 1 to 20 carbon atoms, heteroalkyl of from 1 to 20 carbon atoms, aryl, heteroaryl, cycloalkyl of from 3 to 6 carbon atoms or cycloheteroalkyl of from 3 to 6 carbon atoms.

Particularly preferred directing agents for the present method include alkylamines wherein alkyl is of 1 to 3 carbon atoms and onium compounds, above defined, wherein R is alkyl of 1 to 4 carbon atoms, R' is alkyl of 1 to 6 carbon atoms, M is nitrogen and X is halide or hydroxide. Examples of these include di-n-propylamine, tetrapropylammonium hydroxide, tetraethylammonium hydroxide, tetrapropylammonium bromide, and hexamethyl-hexane diammonium hydroxide or bromide. An inorganic hydroxide or salt of suitable composition can also be used as directing agent; examples of which include KOH, NaOH, CsOH, CsBr, NaCl and $Ca(OH)_2$.

The aqueous phase comprises the aluminum and phosphorus components of synthesis mixture. These components are incorporated into the aqueous phase by dissolving or partially dissolving a pre-formed solid crystalline

aluminum phosphate material in the aqueous phase. This dissolution is accomplished by maintaining the aqueous phase at a sufficiently alkaline pH, e.g., by incorporating therein a sufficient amount of a basic material. Optionally, additional sources of aluminum and/or phosphorus, e.g., $Al_2O_3$ and/or $H_3PO_4$, may also be incorporated into the aqueous phase.

The present method then comprises maintaining the reaction mixture under sufficient conditions of temperature, pH and heating rate to synthesize the desired silicophosphoaluminate. The reaction mixture may be heated at a rate of from 5°C to 200°C per hour up to a temperature of from 80°C to 300°C and maintained there for from 2 hours to 500 hours until crystals of silicophosphoaluminate are formed. The pH of the reaction mixture may be maintained at less than about 9, e.g. 6 to 8, during the heating and crystallization period. This may be accomplished by adjusting the concentration of added base(s). The reaction mixture is also preferably agitated during at least part of the synthesis procedure so as to ensure intimate mixing of the aqueous and organic phases.

After crystals of the desired silicophosphoaluminate are formed, they may be separated from the reaction mixture by filtration, and then washed with water and dried, such as by heating at 25-150°C.

The silicophosphoaluminate may have a composition in which the number of atoms of aluminum and phosphorus is greater than the number of atoms of silicon, i.e. Al + P Si. It is named "silicophosphoaluminate" in view of its crystalline composition and of the charge distribution on its framework tetrahedral T-sites. As synthesized, its characteristic composition, in the anhydrous state, may be as follows:

$$A_v:M^{m+}_{x/m}:(AlO_2)^-_{1-y}:(PO_2)^+_{1-x}:(SiO_2)_{x+y}:N^{n-}_{y/n}$$

wherein v is moles of A, occluded organic material resulting from organic directing agent and/or solvent used in synthesis of and filling microporous voids of the silicophosphoaluminate, which material may be removed upon calcination; M is a cation of valence m; N is an anion of valence n; and x and y are numbers of from greater than -1 to less than +1 which satisfy the relationships:

(1) if x is 0, then y is not 0,

(2) if y is 0, then x is not 0,

(3) if the atomic ratio of Al/P is greater than 1, then (x+y) is greater than 0, e.g. 0.001, and y+0.6x is less than 0.4, and

(4) if the atomic ratio of Al/P is less than 1, then (x+y) is greater than 0, e.g. 0.001, and 0.5 is greater than 0.5y+x.

In the above composition, when x is greater than y, the silicophosphoaluminate is a cation exchanger with potential use as an acidic catalyst. When x is less than y, the silicophosphoaluminate is an anion exchanger with potential use as a basic catalyst. In any event, the silicophosphoaluminate will exhibit an ion exchange capacity of at least about 0.002 meq/g.

The composition of the silicophophoaluminate in the anhydrous state with organic material removed, and with M, m, N, n, x and y as above-defined, may be as follows:

$$M^{m+}_{x/m}:(AlO_2)^-_{1-y}:(PO_2)^+_{1-x}:(SiO_2)_{x+y}:N^{n-}_{y/n}$$

The synthetic crystalline silicophosphoaluminates prepared by the present method are effective cationic ion-exchangers and acid catalysts when the Al/P ratio is greater than unity. Such catalysts have an acid strength spectrum differing from that of zeolites, which can be beneficial in some catalytic processes. For Al/P ratios lower than unity, anionic exchange properties prevail and render such materials active for base-catalyzed reactions. They also offer a new class of catalyst supports and are particularly interesting in this respect because of their high ion-exchange capacity which should enable the retention of high metal loadings. They will show in the latter case the same catalytic flexibility as other supported metal or metal oxide(s) catalysts. Sorption properties indicate that microporous silicophosphoaluminates are molecular shape selective and this can be advantageous in numerous catalytic processes as known in the art of zeolite catalysis.

If synthesized with an aluminum/phosphorus atomic ratio of greater than one, the crystalline silicophosphoaluminate may exhibit an aluminum/silicon atomic ratio of greater than 1.5, and usually in the range of from 1.6 to 600. When the aluminum/phosphorus ratio is of less than one, it may exhibit a phosphorus/silicon atomic ratio of greater than unity, usually within the range of from 1.2 to 600.

It is well recognized that aluminum phosphates exhibit a phosphorus/aluminum atomic ratio of essentially unity, and contain essentially no silicon.

Also, the phosphorus-substituted zeolite compositions, sometimes referred to as "aluminosilicophosphate" zeolites, have a silicon/aluminum atomic ratio of usually greater than unity, generally from 0.66 to 8.0, and a phosphorus/aluminum atomic ratio of less than unity, usually from greater than 0 to 1.

The use of a two-phase synthesis reaction mixture system, exclusive of the solids, enables one to maintain in solution in the organic phase one or more of the reactants which are normally insoluble or unstable in the aqueous phase under the present synthesis conditions. Further, microporous properties can be achieved for the crystalline silicophosphoaluminates by performing inorganic syntheses in the presence of organic or inorganic directing agents. In addition to its templating role, the organic directing agent can also act as a surfactant and can assist the codispersion of the organic and aqueous phases containing the reagents.

The overall molar composition of the two-phase synthesis mixture, in terms of oxides and organic components, may be:

$(A)_a:(M_2O)_b:(Al_2O_3)_c:(SiO_2)_d:(P_2O_5)_e:$ $(Solvent)_f:(anion\ source)_g:(H_2O)_h$ where: a/(c+d+e) is less than 4, b/(c+d+e) is less than 2, d/(c+e) is less than 2, f/(c+d+e) is from 0.1 to 15, g/(c+d+e) is less than 2 and h/(c+d+e) is from 3 to 150. The "Solvent" is an organic solvent and "A" is any organic material derived

from the organic directing agent or organic solvent. The argon is not necessarily separately added to the two-phase system, but may or may not appear in the product crystals from one or more of the other component sources.

In accordance with the present method, a source of aluminum and phosphorus in the synthesis mixture is dissolved or partially dissolved aluminum phosphate. Such aluminum phosphate may be supplied in the form of an amorphous material, a crystalline material or mixtures thereof. Crystalline aluminum phosphates are preferred and may have dense or open-pore type structures. Examples of the latter type of crystalline aluminum phosphates are described in U.S. Patents 4,310,440 and 4,385,994.

Examples of basic materials which may be incorporated into the aqueous phase include hydroxides of Group I metals of the Periodic Table as well as alkali metal carbonates, silicates, and hydroxides of tetraalkylammonium ions.

Optional additional sources of aluminum include any known form of aluminum oxide or hydroxide, organic or inorganic salt or compound.

Optional additional sources of phosphorus include any known form of phosphorus acids or phosphorus oxides, phosphates and phosphites, and organic derivatives of phosphorus.

Useful sources of silicon include any known form of silicic acid or silicon dioxide, alkoxy- or other compounds of silicon.

The organic solvent of the organic phase may be, for example, one or more compounds selected from the group consisting of alcohols, e.g. organic hydroxy compounds including alkanols of from 5 to about 10 carbon atoms, phenols, and naphthols; and other water immiscible organic solvents. Polar organic solvents are preferred.

In a more specific illustration of the present synthesis method, the aqueous phase contains the phosphorus and aluminum components. The organic phase with hexanol as solvent contains the silicon source, e.g. tetraorthoalkyl-silicate. The organic directing agent, e.g. tetraalkylammonium hydroxide or an amine, also acts as a surfactant to emulsify the aqueous and organic phases and optimize the interface. Silicon is progressively supplied during synthesis to the gel by hydrolysis of its organic compound and transfer of the product through the interface into the aqueous phase.

As silicon, aluminum and phosphorus must be available simultaneously to nucleate and crystallize silicophosphoaluminate, the rates of supply of all three elements have to be comparable. This implies that the dissolution of the aluminum phosphate and the hydrolysis of the organic silicon compound should be concerted. Therefore, it is important to predissolve at least a portion of the aluminum phosphate. Also important is the silicon supply rate which is dependent on factors such as the magnitude of the interface, temperature, pH of the aqueous phase, concentration, and nature of the organic solvent and of the silicon reagent.

Because the hydrolysis and transfer rates of silicon are controlled by the magnitude of the interface, as discussed earlier, silicon incorporation is expected to be favored as mixing increases.

As mentioned earlier, pH is an important synthesis variable. As the formation of the silicophosphoaluminate proceeds, pH values of around or above neutral (i.e. about 6 or more, up to a maximum of about 9) should be maintained. As the base stability of silicophosphoaluminates is expected to be intermediate between those of aluminum phosphates and zeolites, pH values of about or slightly above 8 are preferred. Because of the major role played by the hydrolysis of the silicon reagent and the necessity to control it in the present method, there is a need to have a nearly constant pH during crystallization. This can be achieved by predissolving the aluminum phosphate before addition of the other reagents.

To achieve and maintain higher pH values (pH = 8 or above), even after partial decomposition of the organic hydroxide, inorganic bases may be added. These inorganic bases can also play a role as directing agents.

Microporous, crystalline silicophosphoaluminate materials produced by the present process have substantial ion exchange capacity and catalytic activity. In contrast, corresponding materials of the same crystalline structure containing only aluminum, phosphorus and oxygen and essentially no silicon in the lattice structures thereof have little or no ion exchange capacity and catalytic activity. Accordingly, for example, the Alpha Value of a silicophosphoaluminate material may be at least 100 percent or even at least 1000 percent greater than the Alpha Value of a corresponding material of the same crystalline structure but having only aluminum, phosphorus and oxygen and essentially no silicon in its lattice structure. Examples of such corresponding materials are generally referred to in the Wilson et al U. S. Patent No. 4,310,440.

The silicophosphoaluminates prepared hereby having silicon, phosphorus and aluminum as crystal lattice framework components may be molecular sieves or other framework structures. When they are molecular sieves or dense materials, they will possess definite distinguishing crystalline structures which exhibit characteristic X-ray powder diffraction patterns. When they are not molecular sieves, but instead, for example, layered crystalline structures, they may not be fully characterizable simply from X-ray data.

When X-ray values are determined for the silicophosphoaluminates of the present invention, whether molecular sieve or other structures, the radiation is the K-alpha doublet of copper and a diffractometer equipped with a scintillation counter and an associated computer is used. The peak heights, I, and the positions as a function of 2 theta, where theta is the Bragg angle, are determined using algorithms on the computer associated with the spectrometer. From these, the relative intensities, 100 $I/I_o$, where $I_o$ is the intensity of the strongest line or peak, and d (obs.) the interplanar spacing in Angstroms (A), corresponding to the recorded lines, are determined. The relative intensities are given in terms of the strongest line being taken as 100. The various cationic forms of particular silicophosphoaluminates reveal substantially the same pattern with some shifts in interplanar spacing and variation in relative intensity. Other variations can occur, depending on the silicon to aluminum and phosphorus to aluminum ratios of the particular sample, as well as its degree of thenaal treatment.

Silicophosphoaluminates are microporous or dense materials with a framework containing tetrahedrally coordinated (by oxygen) Si, P and Al atoms. If microporous, they show ion-exchange, acidic, and catalytic properties which resemble those of zeolites. Because of their different acid strength spectrum, however, they are potentially interesting as catalysts for acid-catalyzed conversions in which too high or too low an acidity may result in unwanted secondary reactions. Acidity associated with framework Al is brought in by replacement of phosphorus with silicon. Alternately, basicity associated with framework P occurs when framework aluminum is replaced by silicon.

Examples of particular types of silicophosphoaluminates which can be produced by the present process are designated as follows:

MCM-1 (described in EP-A-146385)

MCM-3 (described in EP-A-146386)

MCM-4 (described in EP-A-146387)

MCM-5 (described in EP-A-146388) and

MCM-9 (described in EP-A-146389).

The silicophosphoaluminates synthesized hereby can also be used as catalyst in intimate combination with a metal component such as silver, tungsten, vanadium, molybdenum, rhenium, chromium, manganese, or a Group VIII metal such as platinum or palladium where, for example, a hydrogenation-dehydrogenation or oxidation function is to be performed. Such a component can be ion-exchanged into the composition, impregnated therein or intimately physically admixed therewith. Such component can be impregnated in or onto it such as for example, by, in the case of platinum, treating the crystal with a solution containing a platinum metal-containing ion. Thus, suitable platinum compounds include chloroplatinic acid, platinum chlorides and various compounds containing the platinum amine complex.

The original ions, i.e. cations or anions, of the as synthesized silicophosphoaluminates can be replaced in accordance with techniques well known in the art, at least in part, by ion exchange with other cations or anions. Preferred replacing cations include metal ions, hydrogen ions, hydrogen precursor, e.g. ammonium, ions and mixtures thereof. Particularly preferred cations include hydrogen, rare earth metals and metals of Groups IIA, IIIA, IVA, IB, IIB, IIIB, IVB, VIB and VIII of the Periodic Table of the Elements.

A typical ion exchange technique would be to contact the synthetic crystalline silicophosphoaluminate with a salt of the desired replacing ion or ions. Examples of such salts of cations include the halides, e.g. chlorides, nitrates and sulfates.

The silicophosphoaluminate prepared in accordance herewith can be beneficially converted to another form by thermal treatment. This thermal treatment is generally performed by heating one of these forms at a temperature of at least 300°C for at least 1 minute and generally not longer than 20 hours. While subatmospheric pressure can be employed for the thermal treatment, atmospheric pressure is desired for reasons of convenience. The thermal treatment can be performed at a temperature up to about 1000°C. The thermally treated product is particularly useful in the catalysis of certain hydrocarbon conversion reactions.

Further, the silicophosphaluminate, when employed either as an adsorbent, ion-exchanger or as a catalyst in an organic compound conversion process should be dehydrated, at least partially. This can be done by heating to a temperature in the range of 200°C to 600°C in air or an inert atmosphere, such as nitrogen, etc. and at atmospheric, subatmospheric or superatmospheric pressures for between 30 minutes and 48 hours. Dehydration can also be performed at room temperature merely by placing the silicophosphoaluminate in a vacuum, but a longer time is required to obtain a sufficient amount of dehydration. Therefore, depending upon the degree of dehydration or thermal treatment desired for the silicophosphoaluminate, it may be subjected to heating at a temperature of from 200°C to 1000°C for a time of from 1 minute to 48 hours.

The crystals of the silicophosphoaluminate prepared by the instant invention can be shaped into a wide variety of particle forms. Generally speaking, the particles can be in the form of a powder, a granule, or a molded product, such as an extrudate having a particle size sufficient to pass through a 2 mesh (Tyler) screen and be retained on a 400 mesh (Tyler) screen. In cases where the composition is molded, such as by extrusion, the crystals can be extruded before drying or partially dried and then extruded.

In the case of many catalysts, it is desired to incorporate the silicophosphoaluminate with another material resistant to the temperatures and other condition employed in organic conversion processes. Such materials include active and inactive material and synthetic or naturally occurring zeolites as well as inorganic materials such as clays, silica and/or metal oxides. The latter may be either naturally occurring or in the form of gelatinous precipitates or gels including mixtures of silica and metal oxides. Use of a material in conjunction with the new silicophosphoaluminate, i.e. combined therewith, which is active, tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. These materials may be incorporated into naturally occurring clays, e.g. bentonite and kaolin, to improve the crush strength of the catalyst under commercial operating conditions. Said materials, i.e. clays, oxides, etc., function as binders for the catalyst. It is desirable to provide a catalyst having good crush strength because in commercial use it is desirable to prevent the catalyst from breaking down into powder-like materials. These clay binders have been employed normally only for the purpose of improving the crush strength of the catalyst.

Naturally occurring clays which can be composited with the new crystal include the montmorillonite and kaolin families which include the subbentonites, and the kaolins commonly known as Dixie, McNamee, Georgia and Florida clays or others in which the main mineral contituent is halloysite, kaolinite, dickite, nacrite, or anauxite. Such clays can be used in the raw sate as originally mined or initially subjected to calcination, acid treatment or chemical modification. Binders useful for compositing with the present crystal also include inorganic oxides, notably alumina or silica.

In addition to the foregoing materials, the silicophosphoaluminate crystal can be composited with a porous matrix material such as aluminum phosphate, silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The relative proportions of finely divided crystalline silicophosphoaluminate material and inorganic oxide gel matrix vary widely, with the crystal content ranging from 1 to 90 percent by weight and more usually, particularly when the composite is prepared in the form of beads, in the range of 2 to 80 weight percent of the composite.

The crystalline materials produced by the present process are readily convertible to catalytically active materials for a variety of organic, e.g. hydrocarbon, compound conversion processes. Such conversion processes include, as non-limiting examples, cracking hydrocarbons with reaction

conditions including a temperature of from 300°C to 700°C, a pressure of from 10 to 3040 kPa (0.1 to 30 atmospheres) and a weight hourly space velocity of from 0.1 $hr^{-1}$ to 20 $hr^{-1}$; dehydrogenating hydrocarbon compounds with reaction conditions including a temperature of from 300°C to 700°C, a pressure of from 10 to 1013 kPa (0.1 to 10 atmospheres) and a weight hourly space velocity of from 0.1 to 20; converting paraffins to aromatics with reaction conditions including a temperature of from 100°C to 700°C, a pressure of from 10 to 6080 kPa (0.1 to 60 atmospheres), a weight hourly space velocity of from 0.5 to 400 and a hydrogen/hydrocarbon mole ratio of from 0 to 20; converting olefins to aromatics, e.g. benzene, toluene and xylenes, with reaction conditions including a temperature of from 100°C to 700°C, a pressure of from 10 to 6080 kPa (0.1 to 60 atmospheres), a weight hourly space velocity of from 0.5 to 400 and a hydrogen/hydrocarbon mole ratio of from 0 to 20; converting alcohols, e.g. methanol, or ethers, e.g. dimethylether, or mixtures thereof to hydrocarbons including aromatics with reaction conditions including a temperature of from 275°C to 600°C, a pressure of from 51 to 5066 kPa (0.5 to 50 atmospheres) and a liquid hourly space velocity of from 0.5 to 100; isomerizing xylene feedstock components with reaction conditions including a temperature of from 230°C to 510°C, a pressure of from 304 to 3546 kPa (3 to 35 atmospheres), a weight hourly space velocity of from 0.1 to 200 and a hydrogen/hydrocarbon mole ratio of from 0 to 100; disproportionating toluene with reaction conditions including a temperature of from 200°C to 760°C, a pressure of from 101 to 6080 kPa (1 to 60 atmospheres) and a weight hourly space velocity of from 0.08 to 20; alkylating aromatic hydrocarbons, e.g. benzene and alkylbenzenes, in the presence of an alkylating agent, e.g. olefins, formaldehyde, alkyl halides and alcohols, with reaction conditions including a temperature of from 340°C to 500°C, a pressure of from 101 to 20265 kPa (1 to 200 atmospheres), a weight hourly space velocity of from 2 to 2000 and an aromatic hydrocarbon/alkylating agent mole ratio of from 1/1 to 20/1; and transalkylating aromatic hydrocarbons in the presence of polyalkylaromatic hydrocarbons with reaction conditions including a temperature of from 340°C to 500°C, a pressure of from 101 to 20265 kPa (1 to 200 atmospheres), a weight hourly space velocity of from 10 to 1000 and an aromatic hydrocarbon/polyalkylaromatic hydrocarbon mole ratio of from 1/1 to 16/1.

In general, therefore, catalytic conversion conditions over a catalyst comprising the silicophosphoaluminate in active form include a temperature of from 100°C to 760°C, a pressure of from 10 to 20265 kPa (0.1 to 200 atmospheres), a weight hourly space velocity of from 0.08 $hr^{-1}$ to 2000 $hr^{-1}$ and a hydrogen/organic, e.g. hydrocarbon, compound of from 0 to 100.

In order to more fully illustrate the nature of the invention and the manner of practicing same, the following examples are presented.

When Alpha Value is examined, it is noted that the Alpha Value is an approximate indication of the catalytic cracking activity of the catalyst compared to a standard catalyst and it gives the relative rate constant (rate of normal hexane conversion per volume of catalyst per unit time). It is based on the activity of the highly active silica-alumina cracking catalyst taken as an Alpha of 1 (Rate Constant = 0.016 $sec^{-1}$). In the case of zeolite HZSM-5, only 174 ppm of tetrahedrally coordinated $Al_2O_3$ are required to provide an Alpha Value of 1. The Alpha Test is described in U.S. Patent 3,3543,078 and in The Journal of Catalysis, Vol. IV, pp. 522-529 (August 1965).

When ion-exchange capacity is examined, it is determined by titrating with a solution of sulfamic acid the gaseous ammonia evolved during the temperature programmed decomposition of the ammonium-form of the silicophosphoaluminate The method is described in Thermochimica Acta, Vol. III, pp. 113-124, 1971 by G.T. Kerr and A.W. Chester.

Examples 1-8 which follow relate to the preparation of a silicophosphoaluminate material designated as MCM-2 from an aluminum phosphate material starting material. These Examples 1-8 also demonstrate the distinctions in ion exchange capacity and catalytic activity between certain silicophosphoaluminates and aluminum phosphates.

## EXAMPLE 1

A synthesis reaction mixture was prepared which contained 138.3 g of $H_3PO_4$ (85%), 357.6 g of $H_2O$, 82.5 g of Catapal alumina, and 91.2 g of triethylamine. After stirring until the suspension was homogeneous, the mixture was poured into a 1 1 steel autoclave and maintained under autogeneous pressure at 200°C for 24 h. The product was filtered, washed, and dried at 80°C. The product crystals were analyzed to contain 48.9% Al, 51.1% P, and less than 0.03% Si, percentages atomic. A sample of the as-synthesized product was then submitted for X-ray analysis and found to be a crystalline material exhibiting the diffraction lines shown in Table 1.

TABLE 1

| D | 2TH | I/IMAX |
|---|---|---|
| 11.7535 | 7.515 | 95.99 |
| 6.8016 | 13.005 | 16.08 |
| 5.8886 | 15.033 | 28.26 |
| 4.4534 | 19.921 | 60.53 |
| 4.2109 | 21.080 | 71.59 |
| 3.9417 | 22.538 | 100.00 |
| 3.5870 | 24.800 | 5.00 |
| 3.4042 | 26.155 | 28.27 |
| 3.0617 | 29.142 | 19.01 |
| 2.9523 | 30.248 | 18.94 |
| 2.6520 | 33.771 | 6.87 |
| 2.5750 | 34.810 | 15.00 |

EXAMPLE 2

The synthesis of Example 1 was repeated resulting in a material showing the characteristic diffraction lines of Table 1 and having the composition 47.95% Al, 51.70% P, and 0.35% Si, percentages atomic.

EXAMPLE 3

A quantity of the crystalline aluminum phosphate of Example was calcined at 450°C in nitrogen for 4 h and contacted twice with a solution of 1 M $NH_4Cl$ at pH=7 for 3 h at 80°C. The product was then evaluated for cationic exchange properties by the titration of gaseous ammonia released during heating from 25 to 600°C. The results of this test showed that no ammonia was released above 250°C, indicating the absence of cationic exchange sites.

EXAMPLE 4

The final product of Example 3 was submitted to the Alpha Test. Its Alpha Value was less than 0.1

EXAMPLE 5

A two-phase synthesis reaction mixture was prepared with the organic phase comprising 60 g 1-hexanol and 10 g $Si(OC_2H_5)_4$, and the aqueous phase comprising 71 g $H_2O$, 24 g of the product of Example I calcined at 450°C in nitrogen for 4 h, and 37 g of tetraethylammonium hydroxide (40%). After stirring until the mixture appeared homogeneous, the mixture was transferred to a 0.3 1 steel autoclave and heated to and maintained at 180°C for 7 days. The starting and final pH was between 6 and 8. The crystalline product was separated from the reaction mixture by filtration, water washed, and then dried at 80°C. The product crystals were analyzed to contain 41.1% Al, 42,8% P, and 16.1% Si, percentages atomic. The Al/P ratio was 0.96. A sample of the as-synthesized product silicophosphoaluminate was then submitted for X-ray analysis and found to be a crystalline structure exhibitng the diffraction lines shown in Table 2 which are characteristic for MCM-2.

TABLE 2

| D | 2TH | I/IMAX |
|---|---|---|
| 9.2777 | 9.525 | 100.00 |
| 6.8832 | 12.851 | 17.26 |
| 6.2774 | 14.097 | 15.85 |
| 5.5276 | 16.021 | 80.96 |
| 4.9185 | 18.020 | 15.09 |
| 4.6701 | 18.987 | 2.66 |
| 4.3119 | 20.581 | 98.58 |
| 3.9922 | 22.249 | 4.58 |
| 3.8475 | 23.098 | 4.35 |
| 3.5163 | 25.308 | 19.04 |
| 3.4447 | 25.843 | 19.47 |
| 3.0224 | 29.530 | 2.98 |
| 2.9248 | 30.539 | 35.79 |
| 2.8587 | 31.264 | 35.38 |
| 2.6051 | 34.396 | 6.06 |

EXAMPLE 6

The synthesis of Example 5 was repeated using the calcined product of Example 2 as a source of aluminum and phosphorus. The crystalline product was separated from the crystallization mixture by filtration, water washed, and dried at 80°C. The product crystals were analyzed to contain 44.9% Al, 41.6% P, and 13.5% Si, percentages atomic. The Al/P ratio was 1.08. A sample of the as-synthesized product silicophosphoaluminate was then submitted for X-ray analysis and found to be a crystalline structure exhibiting the diffraction lines shown in Table 3 which are characteristic for MCM-2.

TABLE 3

| D | 2TH | I/IMAX |
|---|---|---|
| 9.2698 | 9.533 | 100.00 |
| 6.8803 | 12.856 | 15.13 |
| 6.2784 | 14.094 | 14.22 |
| 5.5226 | 16.035 | 77.00 |
| 4.9233 | 18.002 | 12.78 |
| 4.6787 | 18.952 | 5.80 |
| 4.3088 | 20.596 | 96.57 |
| 3.9959 | 22.228 | 5.61 |
| 3.8416 | 23.133 | 4.54 |
| 3.5131 | 25.331 | 29.89 |
| 3.4435 | 25.852 | 21.11 |
| 3.3408 | 26.661 | 15.04 |
| 3.1505 | 28.304 | 6.42 |
| 3.0239 | 29.515 | 4.06 |
| 2.9234 | 30.555 | 39.38 |
| 2.8602 | 31.247 | 38.68 |
| 2.6071 | 34.369 | 6.26 |

EXAMPLE 7

A quantity of the crystalline product of Example 6 was calcined at 450°C in nitrogen for 4 h and contacted twice with a solution of 1 M $NH_4Cl$ at pH=7 for 3 h at 80°C. The product was then evaluated for cationic exchange properties by the titration of gaseous ammonia released during heating from 25 to 600°C. The results show the release of two types of ammonia . Low temperature ammonia released up to 250°C amounted to 1.45 meg/g whereas high temperature ammonia, corresponding to cationic sites, was 1.14 meg/g. The maximum rate of desorption for the high temperature ammonia was observed at 375°C.

EXAMPLE 8

The final product of Example 7 was submitted to the Alpha Test. Its Alpha Value was 4.8, indicating at least a 48 fold increase in catalytic activity relative to the product material of Example 2.

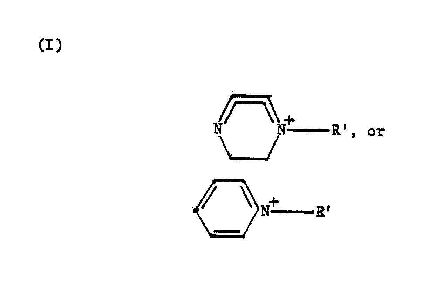

**Claims**

1. A method for the synthesis of a crystalline silicophosphoaluminate, comprising the steps of :

(i) preparing a synthesis mixture comprising a liquid organic phase and a liquid aqueous phase, said organic phase comprising an organic solvent and a silicon source soluble in said solvent, said aqueous phase comprising dissolved or partially dissolved aluminum phosphate, said synthesis mixture further comprising a directing agent;

(ii) maintaining said reaction mixture under crystallization conditions until crystals of said silicophosphoaluminate are formed; and

(iii) recovering said silicophosphoaluminate.

2. A method according to claim 1, wherein said silicophosphoaluminate has a composition, in the anhydrous state, as follows:

wherein A is organic, v is the number of moles of A, M is a cation of valence m, N is an anion of valence n, and x and y are numbers of from greater than -1 to less than +1 which satisfy the relationships:

(1) if x is 0, then y is not 0,

(2) if y is 0, then x is not 0,

(3) if the atomic ratio of Al/P is greater than 1, then (x+y) is greater than 0 and y+0.6x is less than 0.4, and

(4) if the atomic ratio of Al/P is less than 1, then (x+y) is greater than 0 and 0.5 is greater than 0.5y+x, said silicophosphoalaminate having an ion exchange capacity of at least about 0.002 meq/g.

3. A method according to claim 2, wherein said synthesis mixture comprises components expressed in terms of moles of oxides, in the following relationship:

$(A)_a:(M_2O)_b:(Al_2O_3)_c:(SiO_2)_d:(P_2O_5)_e:(Solvent)_f:(\text{anion source})_g:(H_2O)_h$ wherein a, b, c, d, e, f, g and h are numbers satisfying the following relationships:

a/(c+d+e) is less than 4,

b/(c+d+e) is less than 2

d/(c+e) is less than 2,

f/(c+d+e) is from 0.1 to 15,

g/(c+d+e) is less than 2, and

h/(c+d+e) is from 3 to 150.

4. A method according to claim 2 or claim 3 which comprises the additional step of heating said recovered silicophosphoaluminate at a temperature of from 300°C to 1000°C to remove the organic A.

5. A method according to any preceding claim, wherein said synthesis mixture is heated at a rate of from 5°C to 200°C per hour to a temperature of from 80°C to 300°C, and is maintained at said temperature and at a pH of less than 9.

(I)

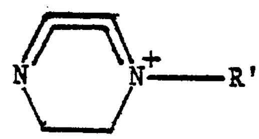
, or